# EUROPEAN PATENT APPLICATION

(11) **EP 2 224 733 A1**
(43) Date of publication of application: **01.09.2010**
(21) Application number: 10001114.7
(22) Date of filing: 03.02.2010
(51) Int. Cl.: H04N 5/64, H04B 1/16

(54) **Auto switch-on TV broadcast receiver unit and method**

(30) Priority: 25.02.2009 CN 200910118205
(71) Applicant: Huawei Device Co., Ltd., Longgang District Shenzhen Guangdong 518129 (CN)
(72) Inventor: Jiang, Haitao, Longgang District Shenzhen Guangdong 518129 (CN)
(74) Representative: Pfenning, Meinig & Partner GbR

(57) **Abstract**

The present invention relates to the TV field. An auto-broadcasting TV unit and an auto-broadcasting method are provided in the present invention to solve the problem of complicated operations for broadcast of a TV terminal with the existing technology. The device includes an antenna, a TV signal processing module, a sensor, and a judging module. The TV signal processing module is configured to process signals received by the antenna and display signals to a user. The sensor is configured to detect the use status of the antenna and send the status information of the antenna to the judging module. The judging module is configured to turn on or turn off the TV signal processing module according to the status information. The benefit of the present invention is to simplify the operation for a user.

## Description

### FIELD OF THE INVENTION

The present invention relates to the TV field, and in particular, to an auto-broadcasting TV unit and a method.

### BACKGROUND

At present, a mobile terminal is usually used as the broadcasting terminal in the technical solution of broadcasting TV programs by receiving terrestrial broadcasting digital TV signals. A handset TV refers to a technology or application service in which TV programs are transmitted to a handset as the terminal device.

In the handset TV field in China, an antenna TV is mounted on a handset to enhance the strength of signals received from the TV and improve the broadcasting quality of received programs.

An external TV antenna is a telescopic antenna and is usually hidden inside a handset. To use the TV antenna, the antenna is pulled out of the handset, and then the antenna is rotated to a position. Or, the antenna is exposed outside of a handset and fixed in a notch. In order to be used, the antenna is taken out of the notch, and is then pulled or rotated to a position. An external antenna features high sensitivity. However, when using a TV program broadcasting device with the external antenna to watch TV programs, a user usually needs to pull the antenna out, and then choose a relevant menu or option to get access to the TV program broadcasting interface. Due to complicated operation steps, the device cannot be used easily.

### SUMMARY

An auto-broadcasting TV unit and an auto-broadcasting method are provided herein to solve the problem that TV programs are broadcast only after performing troublesome operations with the TV unit in the existing technology.

An auto-broadcasting TV unit is provided in an embodiment of the present invention to solve the preceding problem. The TV unit includes an antenna, a TV signal processing module, a sensor, and a judging module.

The TV signal processing module is configured to process TV signals and display signals to a user.

The sensor is configured to detect the use status of the antenna and send the status information of the antenna to the judging module.

The judging module is configured to turn on or turn off the TV signal processing module according to the status information.

The TV signal processing module can be used concurrently through the device provided in an embodiment of the present invention and by changing the status of the antenna. In this way, TV programs are broadcast. The TV unit features simple structure and simple operation.

An auto-broadcasting TV unit is provided in an embodiment of the present invention to solve the preceding problem. The TV unit includes an antenna, a TV signal processing module and a controlling module.

The controlling module is configured to control the turn on/off of the TV signal processing module according to a use status of the antenna.

The TV signal processing module is configured to process TV signals and display the signals to a user.

A TV unit auto-broadcasting method is provided in an embodiment of the present invention to solve the preceding problem. The method includes:
detecting, by the sensor, the use status of the antenna to obtain the status information of the antenna, and starting or stopping broadcasting TV programs according to the status information.

A TV unit auto-broadcasting method is provided in an embodiment of the present invention to solve the preceding problem. The method includes:
a controlling module obtains controls the TV signal processing module to turn on/off according to the a status of the antenna, wherein the TV signal processing module is configured to process TV signals and display the signals to a user.

The TV signal processing module can be used concurrently through the method provided in an embodiment of the present invention and by changing the status of the antenna. In this way, TV programs are broadcast. The TV unit features simple structure and simple operation.

### BRIEF DESCRIPTION OF THE DRAWINGS

The drawings enable a user to further understand the embodiments of the present invention. The drawings constitute a part hereof and are not used to restrict the present invention, where:
FIG. 1 is a schematic diagram showing the structure of an auto-broadcasting TV unit according to a first embodiment of the present invention;
FIG. 2 is a schematic diagram showing the structure of an auto-broadcasting TV unit according to a second embodiment of the present invention;
FIG. 3 is a schematic diagram showing the structure of an auto-broadcasting TV unit according to a third embodiment of the present invention;
FIG. 4 is a schematic diagram showing the structure of an auto-broadcasting TV unit according to a fourth embodiment of the present invention;
FIG. 5 is a schematic diagram showing the structure of an auto-broadcasting TV unit according to a fifth embodiment of the present invention;
FIG. 6 is a schematic diagram showing the structure of an auto-broadcasting TV unit according to a sixth embodiment of the present invention;
FIG. 7 is a schematic diagram showing the structure of an auto-broadcasting TV unit according to a seventh embodiment of the present invention;
FIG. 8 is a schematic diagram showing the structure of an auto-broadcasting TV unit according to a eighth embodiment of the present invention;
FIG. 9 is a schematic diagram showing the structure of an auto-broadcasting TV unit according to a ninth embodiment of the present invention;
FIG. 10 is a flowchart of a TV unit auto-broadcasting method according to a first embodiment of the present invention;
FIG. 11 is a flowchart of a TV unit auto-broadcasting method according to a second embodiment of the present invention; and
FIG. 12 is a flowchart of a TV unit auto-broadcasting method according to a third embodiment of the present invention.

### DETAILED DESCRIPTION

An auto-broadcasting TV unit and an auto-broadcasting method are provided in an embodiment of the present invention. The following describes the embodiments of the present invention in detail in combination with the drawings.

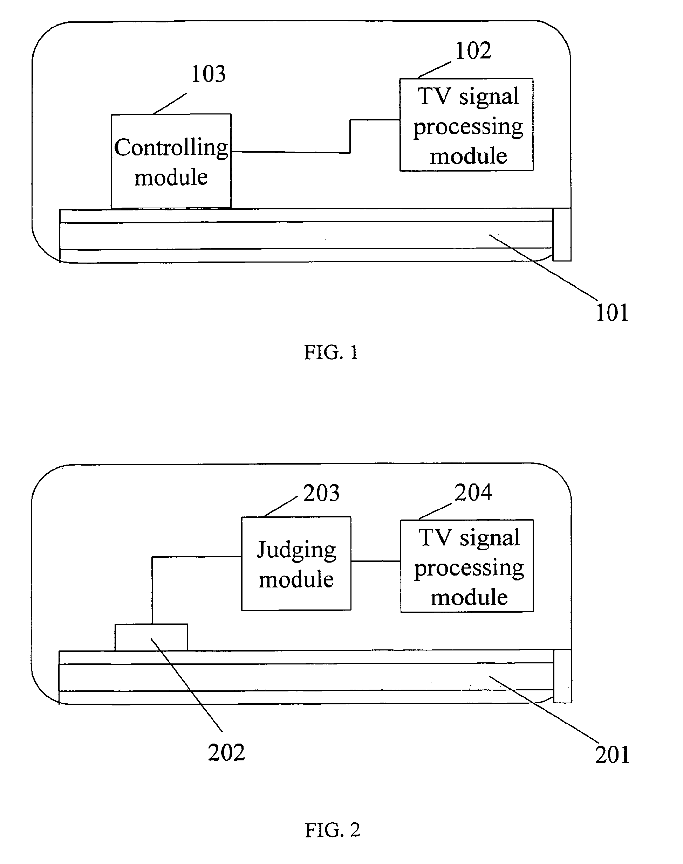

FIG. 1 is a schematic diagram showing the structure of an auto-broadcasting TV unit according to a first embodiment of the present invention.

The TV unit includes an antenna 101, a TV signal processing module 102, and a controlling module 103.

The antenna 101 is inserted into the TV unit the shell externally. The antenna configured to receive TV signals.

The TV signal processing module 102 is configured to process TV signals and display the signals to a user when it is turned on.

The controlling module 103 is configured to control the turn on/off of the TV signal processing module according to a use status of the antenna.

The TV unit may be a mobile terminal with the TV broadcasting function preferably.

In the preceding embodiment, the controlling module can detect the use status of the antenna. When the antenna is used, that is, a user pulls the antenna out to prepare for watching TV, the controlling module can detect the status indicating that the antenna is pulled out, and turn on TV signal processing module. In this case, the user can watch TV programs without manually performing complicated turn-on operation.

FIG. 2 is a schematic diagram showing the structure of an auto-broadcasting TV unit according to a second embodiment of the present invention.

The TV unit includes an antenna 201, a sensor 202, a judging module 203, and a TV signal processing module 204.

The antenna 201 is inserted into the TV unit the shell externally. The antenna can be an external antenna described in the background technology and is configured to receive TV signals.

The sensor 202 is configured to detect the status of the antenna 201. When the antenna 201 is in the first status, the output of the sensor 202 is first status signals. When the antenna 201 is in the second status, the output of the sensor 202 is second status signals.

The judging module 203 is configured to automatically turn on the TV signal processing module 204 according to the status signals sent by the sensor 202, and display TV programs to a user, or turn off the TV signal processing module 204.

The TV signal processing module 204 is controlled by the judging module 203 and configured to process TV signals that are received by the antenna 201.

The TV unit may be a mobile terminal with the TV broadcasting function preferably.

In the preceding embodiment, the sensor can detect the use status of the antenna. When the antenna is used, that is, a user pulls the antenna out to prepare for watching TV, the sensor can detect the status indicating that the antenna is pulled out, and send the turn-on signal to the judging module. The judging module processes TV signals and displays TV signals to a user. In this case, the user can watch TV programs without manually performing complicated turn-on operation.

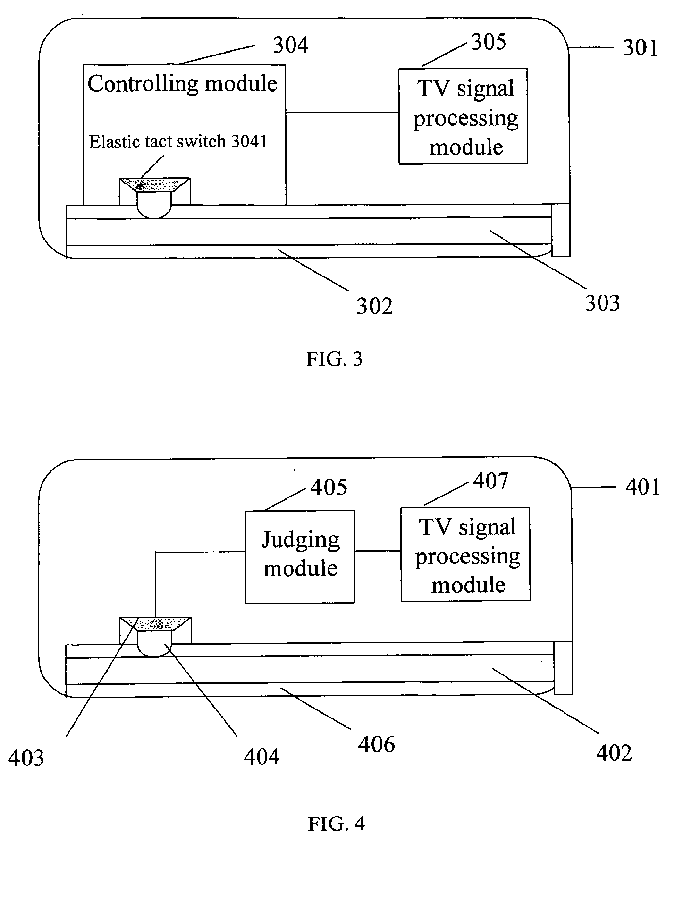

FIG. 3 is a schematic diagram showing the structure of an auto-broadcasting TV unit according to a third embodiment of the present invention.

The TV unit includes a TV broadcasting device shell 301, a recess 302, an antenna 303, a controlling module 304 and a TV signal processing module 305, wherein the controlling module 304 comprises an elastic tact switch 3041.

The antenna 303 is placed in the recess 302.

One end of the elastic tact switch 3041 is put against the antenna 303 at the side of the recess 302, when the antenna303 is not used, the antenna303 presses against the elastic tact switch 3041, and then the elastic tact switch3041 sends turn-off signal to the TV signal processing module 305, when the antenna 303 is used, the elastic tact switch 3041 is not squeezed, and then the elastic tact switch 3041 sends turn-on signal to the TV signal processing module 305.

In the preceding embodiment, the elastic tact switch 3041 is set to send a turn-on signal to the TV signal processing module 304 when a user pulls the antenna 305 out. In this case, when a user wants to watch TV, that is, by pulling the antenna out, the TV signal processing module is turned on automatically to broadcast TV programs, thus simplifying the operation of the user and reducing the cost greatly.

FIG. 4 is a schematic diagram showing the structure of an auto-broadcasting TV unit according to a fourth embodiment of the present invention.

The TV unit includes a TV broadcasting device shell 401, an antenna 402, an elastic base 403, a tact switch 404, a judging module 405, a recess 406, and a TV signal processing module 407.

The shell of the TV broadcasting device 401 is a TV broadcasting terminal described in the background technology.

The antenna 402 is placed in the recess 406.

The elastic base 403 is connected to the tact switch 404 to provide elastic recovery force.

One end of the tact switch 404 is put against the antenna 402 at the side of the recess 406, and the other end is put against the elastic base 403. The tact switch 404 is connected to the judging module 405. When the antenna 402 presses against one end of the tact switch 404, the tact switch 404 presses against the elastic base 403. In this case, the tact switch 402 sends the turn-off status information to the judging module 405. When a user pulls the antenna 402 out, the tact switch 404 is not squeezed by the antenna 402, and the elastic base 403 is not squeezed by the tact switch 404 and restored to the original status. In this case, the tact switch 402 sends the turn-on status information to the judging module 405.

The judging module 405 is configured to turn on or turn off the TV signal processing module 407 according to the status information sent by the tact switch 404.

The TV signal processing module 407 is controlled by the judging module 405 and is configured to process TV signals that are received by the antenna 402.

In the preceding embodiment, the tact switch 404 is set to send a turn-on signal to the judging module 405 when a user pulls the antenna 402 out, and then the judging module 405 sends a turn-on command to the TV signal processing module 407. In this case, when a user wants to watch TV, that is, by pulling the antenna out, the TV signal processing module is turned on automatically to broadcast TV programs, thus simplifying the operation of the user and reducing the cost greatly.

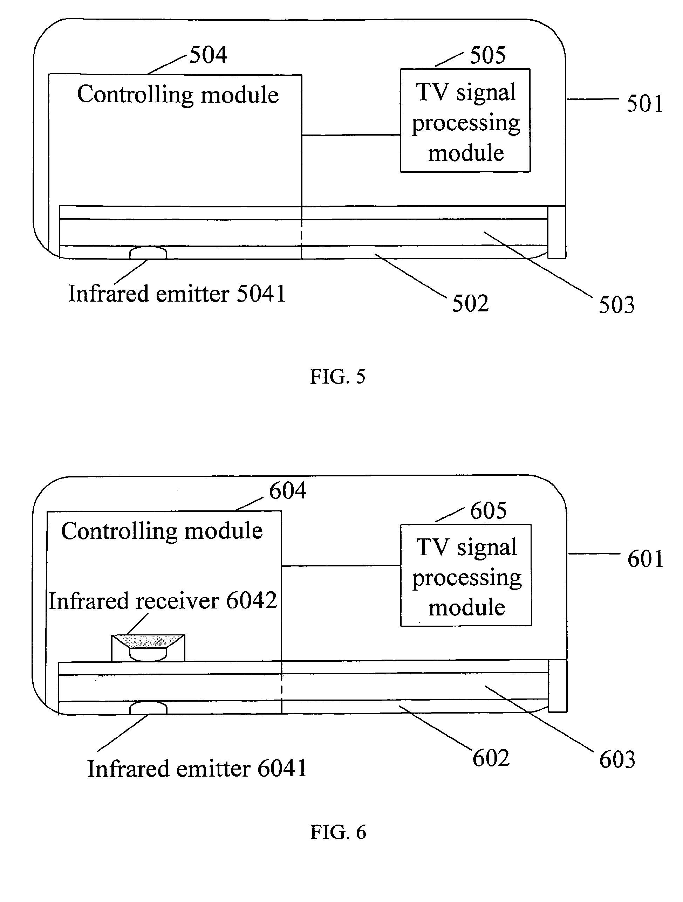

FIG. 5 is a schematic diagram showing the structure of an auto-broadcasting TV unit according to a fifth embodiment of the present invention.

The TV unit includes a TV broadcasting device shell 501, a recess 502, an antenna 503, a controlling module 504 and a TV signal processing module 505, wherein the controlling module 503 comprises an infrared emitter 5041.

The infrared emitter 5041 is configured to turn on the TV signal processing module 505 by emitting infrared.

The antenna 503 is placed in the recess 502. when the antenna 503 is not used, the antenna 503 is in a position block infrared signals emitted by the infrared emitter 5041, and then the TV signal processing module 505 is turned off; and when the antenna 503 is used, the antenna 503 is not in the blocking position, and then the TV signal processing module 505 is turned on.

In the preceding embodiment, the infrared emitter 5041 is set to send a turn-on signal to the TV signal processing module 505. In this case, when a user wants to watch TV, that is, by pulling the antenna out, the TV signal processing module is turned on automatically to broadcast TV programs, thus simplifying the operation of the user and reducing the cost greatly.

FIG. 6 is a schematic diagram showing the structure of an auto-broadcasting TV unit according to a sixth embodiment of the present invention.

The TV unit includes a TV broadcasting device shell 601, a recess 602, an antenna 603, a controlling module 604 and a TV signal processing module 605, wherein the controlling module 604 comprises an infrared emitter 6041 and an infrared receiver 6042.

The antenna 603 is placed in the recess 602.

The infrared emitter 6041 and the infrared receiver 6042 are mounted on both sides of the recess 602, that is, on both sides of the antenna 603. The infrared emitter 6041 is configured to send infrared signals. The infrared receiver 6042 is configured to receive infrared signals.

When the antenna 603 is not used, the antenna 603 is in a position to block infrared signals between the infrared emitter 6041 and the infrared receiver 6042; in this case, the infrared receiver 6042 sends turn-off signal to the TV signal processing module 605; and when the antenna 603 is used, the antenna 603 is not in the blocking position, in this case, the infrared receiver 6042 sends turn-on signal to the TV signal processing module 605.

In the preceding embodiment, the infrared emitter 6041 set to send an infrared signal to the infrared receiver 6042 and the infrared receiver 6042 is set to send a turn-on signal to the TV signal processing module 605 after received the infrared signals emitted by the infrared emitter 6041. In this case, when a user wants to watch TV, that is, by pulling the antenna out, the TV signal processing module is turned on automatically to broadcast TV programs, thus simplifying the operation of the user and reducing the cost greatly.

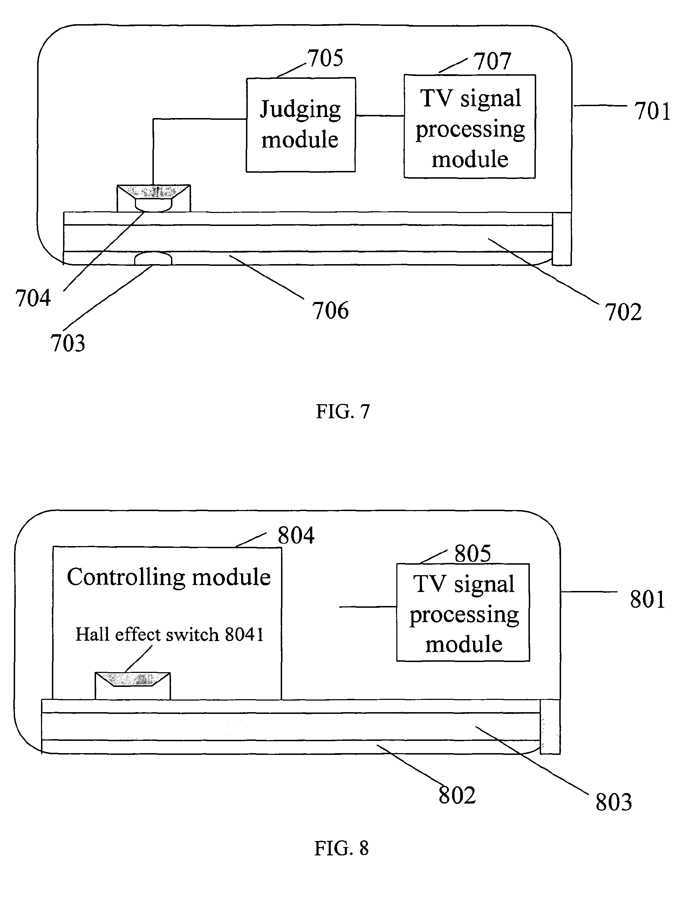

FIG. 7 is a schematic diagram showing the structure of an auto-broadcasting TV unit according to a seventh embodiment of the present invention.

The TV unit includes a TV broadcasting device shell 701, an antenna 702, an infrared emitter 703, an infrared receiver 704, a judging module 705, a recess 706, and a TV signal processing module 707.

The shell of the TV broadcasting device 701 is a TV broadcasting terminal described in the background technology.

The antenna 702 is placed in the recess 706.

The infrared emitter 703 and the infrared receiver 704 are mounted on both sides of the recess 706, that is, on both sides of the antenna 702. The infrared emitter 703 is configured to send infrared signals. The infrared receiver 704 is configured to receive infrared signals. When receiving infrared signals, the infrared receiver 704 sends a turn-on status signal to the judging module 705. When no infrared signals are received, the infrared receiver 704 sends a turn-off status signal to the judging module 705.

In this embodiment, the infrared emitter 703 is mounted at the lower part of the recess 706. The infrared receiver 704 is mounted at the upper part of the recess 706. The infrared emitter 703 and the infrared receiver 704 are separated by the antenna 702 which is in the middle of the recess 706. The infrared receiver 704 fails to receive infrared signals sent by the infrared emitter 703 due to the blocking of the antenna 702. In this case, the judging module 705 that is connected to the infrared receiver 704 receives a turn-off status signal.

The judging module 705 is configured to turn on or turn off the TV signal processing module 707 according to the status information sent by the infrared receiver 704.

In the embodiment, as a preferred embodiment, the judging module 705 may also be configured to judge whether the TV unit is turned on. If the TV unit is turned off, the TV unit can be turned on automatically.

The TV signal processing module 707 is controlled by the judging module 705 and is configured to process TV signals that are received by the antenna 702.

In the preceding embodiment, the infrared emitter 703 and the infrared receiver are set to send a turn-on signal to the judging module 705 when a user pulls the antenna 702 out, and then the judging module 705 sends a turn-on command to the TV signal processing module 707. In this case, when a user wants to watch TV, that is, by pulling the antenna out, the TV signal processing module is turned on automatically to broadcast TV programs, thus simplifying the operation of the user and reducing the cost greatly.

FIG. 8 is a schematic diagram showing the structure of an auto-broadcasting TV unit according to a eighth embodiment of the present invention.

The TV unit includes a TV broadcasting device shell 801, a recess 802, an antenna 803, a controlling module 804 and a TV signal processing module 805, wherein the controlling module 803 comprises a hall effect switch 8041.

When the antenna 803 is in a first position in which the antenna 803 was not used, then the TV signal processing module 805 is turned off; and when the antenna 803 is in a second position in which the antenna 803 was used, then the TV signal processing module 805 is turned on.

In the preceding embodiment, the hall effect switch 8041 is set to detect the position of the antenna 803 and the controlling module 804 set to send a turn-on signal to the TV signal processing module 805 when the antenna 803 is in a second position in which the antenna 803 was used. In this case, when a user wants to watch TV, that is, by pulling the antenna, the TV signal processing module is automatically turned on to broadcast TV programs. When the antenna 803 is down, that is, the antenna 803 is in the first position, the hall effect switch 8041 sends a turn-off signal to the TV signal processing module 804 to stop broadcasting TV programs, thus simplifying the operation of the user and reducing the cost greatly.

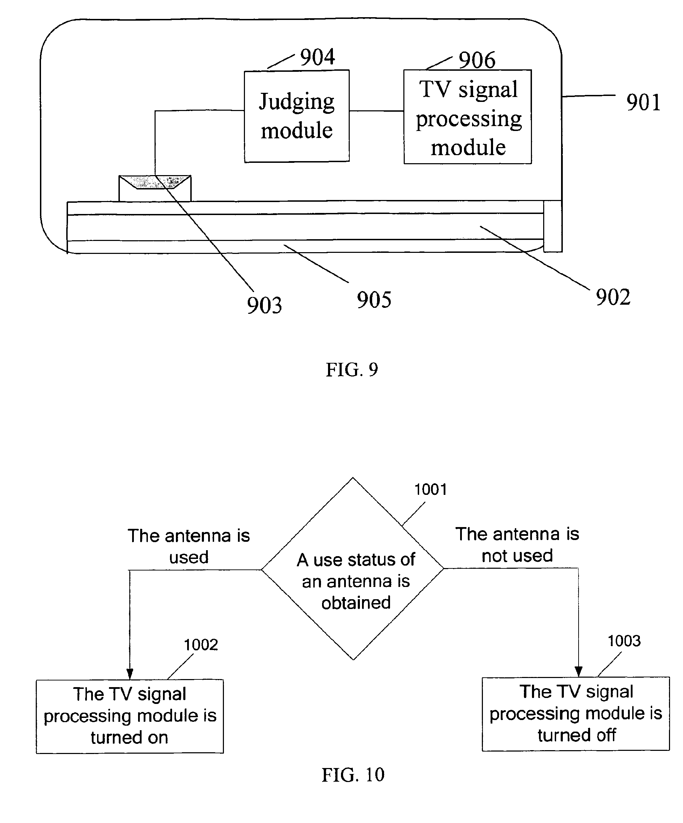

FIG. 9 is a schematic diagram showing the structure of an auto-broadcasting TV unit according to a ninth embodiment of the present invention.

This embodiment is similar to embodiment 2. Therefore, only the technical features in this embodiment different from the features in embodiment 1 are described, and the same or similar features are not described.

In the embodiment, the TV unit includes a TV broadcasting device shell 901, an antenna 902, a judging module 904, a recess 905, and a TV signal processing module 906. The tact switch and the elastic base are replaced by the hall effect switch 903.

The hall effect switch 903 is an induction component whose status varies with the surrounding magnetic field. The switch is configured to detect whether the antenna 902 is pulled out, that is, to judge whether the antenna 902 is in the first position or the second position, and then send the status information to the judging module 904.

In the preceding embodiment, the hall effect switch 903 is set to send a turn-on signal to the judging module 904 when a user pulls the antenna 902 out, that is, the antenna 902 is in the second position. Subsequently, the judging module 904 sends a turn-on command to the TV signal processing module 906. In this case, when a user wants to watch TV, that is, by pulling the antenna, the TV signal processing module is automatically turned on to broadcast TV programs. When the antenna 902 is down, that is, the antenna 902 is in the first position, the hall effect switch 903 sends a turn-off signal to the judging module 904. Subsequently, the judging module 904 sends a turn-off command to the TV signal processing module 906 to stop broadcasting TV programs, thus simplifying the operation of the user and reducing the cost greatly.

FIG. 10 is a flowchart of a TV unit auto-broadcasting method according to a first embodiment of the present invention.
Step 1001: a use status of an antenna is obtained.
Step 1002: a TV signal processing module is turned on if the antenna is used.
Step 1003: the TV signal processing module is turned off if the antenna is not used.

The TV signal processing module is configured to process TV signals and display the signals to a user after turning on. When the antenna is not used, the TV signal processing module is turned off, when the antenna is used, the TV signal processing module is turned on.

In the preceding embodiment, the use status of an antenna can be obtained by a controlling module of the TV unit.

The controlling module may contain an elastic tact switch, One end of the elastic tact switch is put against the antenna, when the antenna is not used, the antenna presses against the elastic tact switch, and then the elastic tact switch sends turn-off signal to the TV signal processing module, when the antenna is used, the elastic tact switch is not squeezed, and then the elastic tact switch sends turn-on signal to the TV signal processing module.

The controlling module may contain an infrared emitter, The infrared emitter is configured to turn on the TV signal processing module by emitting infrared, when the antenna is not used, the antenna is in a position block infrared signals emitted by the infrared emitter, and then the TV signal processing module is turned off; and when the antenna is used, the antenna is not in the blocking position, and then the TV signal processing module is turned on.

The controlling module may contain an infrared emitter and further contains an infrared receiver. The infrared emitter and the infrared receiver are mounted on both sides of the antenna. The infrared emitter is configured to send infrared signals. The infrared receiver is configured to receive infrared signals. when the antenna is not used, the antenna is in a position to block infrared signals between the infrared emitter and the infrared receiver; in this case, the infrared receiver sends turn-off signal to the TV signal processing module; and when the antenna is used, the antenna is not in the blocking position, in this case, the infrared receiver sends turn-on signal to the TV signal processing module.

The controlling module may contain a hall effect switch, when the antenna is in a first position in which the antenna was not used, the TV signal processing module is turned off; and when the antenna is in a second position in which the antenna was used, the TV signal processing module is turned on.

In the preceding embodiment, the TV signal processing module is turned on when the antenna is used. Then the TV signal processing module processes and displays TV signals to a user. In this case, the user can watch TV programs without manually performing complicated turn-on operation.

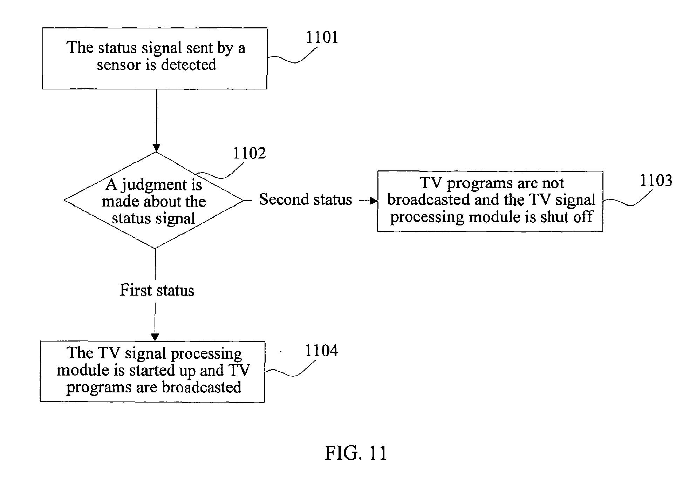

FIG. 11 is a flowchart of a TV unit auto-broadcasting method according to a second embodiment of the present invention.
Step 1101: The status signal sent by a sensor is detected.
Step 1102: A judgment is made about whether the status signal indicates the first status or the second status. If the status information indicates the second status, the process proceeds to step 1103. If the status information indicates the first status, the process proceeds to step 1104.
Step 1103: TV programs are not broadcast and the TV signal processing module is turn off.
Step 1104: The TV signal processing module is turned on to process TV programs that are received by the antenna and broadcast TV programs to a user.

In the preceding embodiment, the sensor is set to automatically turn on the TV signal processing module to broadcast TV programs when a user wants to watch TV programs, that is, by pulling the antenna out. In this case, the operation of the user is simplified and the cost is reduced greatly.

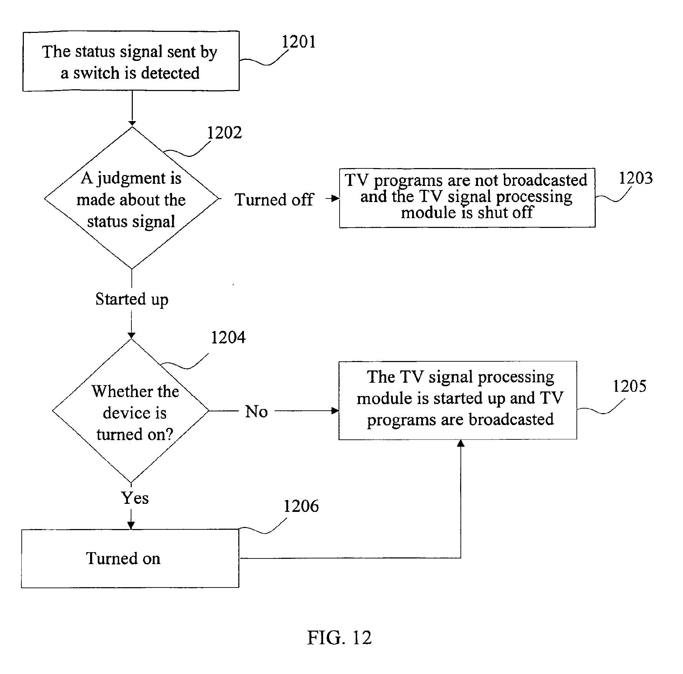

FIG. 12 is a flowchart of a TV unit auto-broadcasting method according to a third embodiment of the present invention.
Step 1201: The status signal sent by a switch is detected.
Step 1202: A judgment is made about whether the status signal is a turn-on signal or a turn-off signal. If the status signal is a turn-off signal, the process proceeds to step 1203. If the status signal is a turn-on signal, the process proceeds to step 1204.
Step 1203: TV programs are not broadcast, and the TV signal processing module is turn off.
Step 1204: A judgment is made about whether the TV unit is turned on. If the TV unit is turned on, the process proceeds to step 1205; otherwise, the process proceeds to step 1206.
Step 1205: The TV signal processing module is turned on to process TV programs that are received by the antenna and broadcast TV programs to a user.
Step 1206: The TV unit is turned on and the process returns to step 1205.

In the preceding embodiment, a user needs to perform only one action, that is, pull the antenna out, then the switch sends the turn-on status information and the TV unit is turned on, thus simplifying the operation of a user.

The TV unit provided in an embodiment of the present invention can include the devices in many forms such as a handset, a TV tuner, a data card, a PDA, an MP3, an MP4, a digital camera or a notebook computer. The TV unit is not restricted by the present invention.

The TV signals described in an embodiment of the present invention are of terrestrial broadcasting programs such as China Mobile Multimedia Broadcasting (CMMB), Digital Audio Broadcasting (DAB), and Terrestrial Digital Video Broadcasting (DVB-T) programs, or of the Satellite Digital Video Broadcasting (DVB-S) program, or include analog broadcasting TV signals in the existing technology. The TV signals are not restricted by the present invention.

The benefit of the present invention is that TV programs are automatically broadcast on a TV program broadcasting device after a user pulls the TV antenna out. In this case, the user can watch TV programs by performing a simple operation, thus obtaining a good experience. In addition, the device can be turned on to broadcast TV programs after a user pulls the antenna out. In this case, the operation step of turn-on is reduced and the device is easy to use.

The preceding section describes the purpose, technical solution, and benefit of the embodiments of the present invention in detail. It is understandable that although the invention is described through some exemplary embodiments, the invention is not limited to such embodiments. All the modifications, equivalent replacements, and improvements made by those skilled in the art with departing from the spirit and principle of the invention are protected by the present invention.

## Claims

1. An auto-broadcasting TV unit, comprising an antenna, a TV signal processing module and a controlling module, wherein:
the controlling module is configured to control the turn on/off of the TV signal processing module according to a use status of the antenna; and
the TV signal processing module is configured to process TV signals and display the signals to a user.

2. The auto-broadcasting TV unit according to claim 1, wherein the controlling module comprises an elastic tact switch:
when the antenna is not used, the antenna presses against the elastic tact switch, and then the elastic tact switch sends turn-off signal to the TV signal processing module; and
when the antenna is used, the elastic tact switch is not squeezed, and then the elastic tact switch sends turn-on signal to the TV signal processing module.

3. The auto-broadcasting TV unit according to claim 1, wherein the controlling module comprises an infrared emitter:
when the antenna is not used, the antenna is in a position block infrared signals emitted by the infrared emitter, and then the TV signal processing module is turned off; and
when the antenna is used, the antenna is not in the blocking position, and then the TV signal processing module is turned on.

4. The auto-broadcasting TV unit according to claim 3, wherein the controlling module further comprises an infrared receiver:
when the antenna is not used, the antenna is in a position to block infrared signals between the infrared emitter and the infrared receiver; in this case, the infrared receiver sends turn-off signal to the TV signal processing module; and
when the antenna is used, the antenna is not in the blocking position; in this case, the infrared receiver sends turn-on signal to the TV signal processing module.

5. The auto-broadcasting TV unit according to claim 1, wherein the controlling module comprises a hall effect switch, configured to detect position information of the antenna:
when the antenna is in a first position in which the antenna was not used, then the TV signal processing module is turned off; and
when the antenna is in a second position in which the antenna was used, then the TV signal processing module is turned on.

6. The auto-broadcasting TV unit according to any one of claims 1-5, further comprising a judging module, configured to judge whether a TV unit is turned on and turn on the TV unit if the TV unit is not turned on.

7. A TV unit auto-broadcasting method, comprising:
a controlling module obtains controls the TV signal processing module to turn on/off according to the a status of the antenna, wherein the TV signal processing module is configured to process TV signals and display the signals to a user.

8. The TV unit auto-broadcasting method according to claim 7, wherein the controlling module obtains the use status of an antenna and controls the TV signal processing module to turn on/off according to the use status of the antenna by an elastic tact switch:
when the antenna is not used, the antenna presses against the elastic tact switch, and then the elastic tact switch sends turn-off signal to the TV signal processing module; and
when the antenna is used, the elastic tact switch is not squeezed, and then the tact switch sends turn-on signal to the TV signal processing module.

9. The TV unit auto-broadcasting method according to claim 7, wherein the controlling module obtains the use status of an antenna and controls the TV signal processing module to turn on/off according to the use status of the antenna by an infrared emitter:
when the antenna is not used, the antenna is in a position block infrared signals emitted by the infrared emitter, and then the TV signal processing module is turned off; and
when the antenna is used, the antenna is not in the blocking position, and then the TV signal processing module is turned on.

10. The TV unit auto-broadcasting method according to claim 9, wherein the controlling module obtains the use status of an antenna and controls the TV signal processing module to turn on/off according to the use status of the antenna further by an infrared receiver:
when the antenna is not used, the antenna is in a position to block infrared signals between the infrared emitter and the infrared receiver; in this case, the infrared receiver sends turn-off signal to the TV signal processing module; and
when the antenna is used, the antenna is not in the blocking position; in this case, the infrared receiver sends turn-on signal to the judging module.

11. The TV unit auto-broadcasting method according to claim 7, wherein the controlling module obtains the use status of an antenna by a hall effect switch, the hall effect switch configured to detect position information of the antenna:
when the antenna is in a first position in which the antenna was not used, then the TV signal processing module is turned off; and
when the antenna is in a second position in which the antenna was used, then the TV signal processing module is turned on.

12. The TV unit auto-broadcasting method according to any one of claims 7-11, further comprising:
judging whether a TV unit is turned on and turn on the TV unit if the TV unit is not turned on.

13. An auto-broadcasting TV unit, comprising an antenna, a TV signal processing module, a sensor, and a judging module, wherein:
the TV signal processing module is configured to process TV signals and display the signals to a user;
the sensor is configured to detect a use status of the antenna and send status information of the antenna to the judging module; and
the judging module is configured to turn on or turn off the TV signal processing module according to the status information.

14. The auto-broadcasting TV unit according to claim 13, wherein the sensor comprises a tact switch and an elastic base:
when the antenna is not used, the antenna presses against the tact switch, the tact switch presses against the elastic base, and then the tact switch sends turn-off status information to the judging module; and
when the antenna is used, the tact switch is not squeezed, the elastic base moves, due to an elastic recovery force, in the same direction as the elastic recovery force, and then the tact switch sends turn-on status information to the judging module.

15. the auto-broadcasting TV unit according to claim 13, wherein the sensor comprises an infrared emitter and an infrared receiver:
when the antenna is not used, the antenna is in a position to block infrared signals between the infrared emitter and the infrared receiver; in this case, the infrared receiver sends turn-off status information to the judging module; and
when the antenna is used, the antenna is not in the blocking position; in this case, the infrared receiver sends turn-on status information to the judging module.

16. The auto-broadcasting TV unit according to claim 13, wherein the sensor is a hall effect switch, configured to detect position information of the antenna:
when the antenna is in a first position, the hall effect switch sends turn-off status information to the judging module; and
when the antenna is in a second position, the hall effect switch sends turn-on status information to the judging module.

17. A TV unit auto-broadcasting method, comprising:
detecting, by a sensor, a use status of an antenna to obtain status information of the antenna, and starting or stopping broadcasting TV programs according to the status information.

18. The TV unit auto-broadcasting method according to claim 17, wherein the sensor further detects a position of the antenna.

19. The TV unit auto-broadcasting method according to claim 17, wherein the starting or stopping of broadcasting TV programs according to the status information further comprises:
judging the status information:
if the status information indicates to start, a start command is sent to a TV signal processing module to broadcast the TV programs; and
if the status information indicates to stop, a stop command is sent to the TV signal processing module to stop broadcasting the TV programs.

20. The TV unit auto-broadcasting method according to claim 19, wherein, after the status information indicates to start, the method further comprises:
judging whether a TV unit is turned on; if not, the TV unit needs to be turned on.
